(19) Europäisches Patentamt / European Patent Office / Office européen des brevets

(11) **EP 3 422 599 B1**

(12) **FASCICULE DE BREVET EUROPEEN**

(45) Date de publication et mention de la délivrance du brevet:
**22.09.2021   Bulletin 2021/38**

(51) Int Cl.:
*H04B 7/185* (2006.01)     *H04B 7/204* (2006.01)

(21) Numéro de dépôt: **18179791.1**

(22) Date de dépôt: **26.06.2018**

(54) **DISPOSITIF DE COMMUNICATION POUR LE TRAITEMENT D'INTERFERENCES ENTRE SIGNAUX EMIS DANS DES SPOTS D'EMISSION VOISINS, PROCEDE ASSOCIE**

KOMMUNIKATIONSVORRICHTUNG FÜR DIE VERARBEITUNG VON INTERFERENZEN ZWISCHEN SIGNALEN, DIE AUS BENACHBARTEN SENDESPOTS AUSGESENDET WERDEN, UND ENTSPRECHENDES VERFAHREN

COMMUNICATION DEVICE FOR PROCESSING INTERFERENCES BETWEEN SIGNALS TRANSMITTED IN NEIGHBOURING EMISSION SPOTS, ASSOCIATED METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **28.06.2017   FR 1755966**

(43) Date de publication de la demande:
**02.01.2019   Bulletin 2019/01**

(73) Titulaire: **Eutelsat SA**
**92130 Issy Les Moulineaux (FR)**

(72) Inventeurs:
• **LE PERA, Alessandro**
**92130 Issy-Les-Moulineaux (FR)**
• **COURSON, Jean-Paul**
**82000 Montauban (FR)**
• **ROUX, Laurent**
**31100 Toulouse (FR)**

(74) Mandataire: **Cabinet Camus Lebkiri**
**25 rue de Maubeuge**
**75009 Paris (FR)**

(56) Documents cités:
**WO-A1-2016/170282     US-A- 6 157 811**
**US-A1- 2010 221 997     US-B1- 7 317 916**

**Description**

**DOMAINE**

La présente invention concerne le domaine des dispositifs de communication tels que des passerelles de communication transmettant des signaux d'une station sol vers un satellite. L'invention s'inscrit dans le domaine des transmissions acheminant une pluralité de signaux utiles à un satellite pour réémettre ces derniers dans des canaux de communications dédiés à une pluralité de spots géographiques terrestres. Plus particulièrement, l'invention se rapporte aux dispositifs et procédés traitant des communications afin de réduire les interférences issues de communications partageant des bandes de fréquences communes et destinées à couvrir des spots d'émission voisins.

**ETAT DE L'ART**

Actuellement, les satellites de diffusion permettent de diffuser une pluralité de signaux utiles ou d'établir des canaux de transmissions dans différents spots d'émission afin de couvrir des zones géographiques particulières. Les canaux sont établis entre d'une part le satellite et d'autre part des spots terrestres. Les signaux à diffuser proviennent généralement d'une passerelle terrestre, également connue sous le nom de « Gateway », émettant via des canaux montants les données à transmettre au satellite.

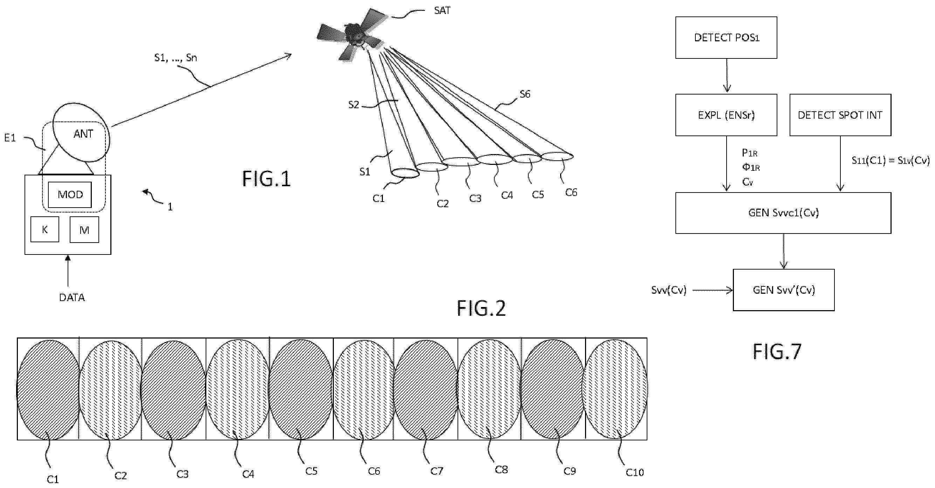

La figure 1 représente une configuration permettant de décrire une solution de l'art antérieur et celle de l'invention. Le satellite SAT comporte des moyens de réception de signaux provenant de la passerelle telle qu'une antenne de réception et des moyens pour traiter les signaux reçus à diffuser selon des zones géographiques. Le satellite SAT est capable de générer une pluralité de cônes d'émission afin de couvrir une zone terrestre particulière, présentant notamment un intérêt en termes de population. La géométrie des cônes d'émission est configurée à partir d'un pointage d'antenne donné. Un cône d'émission est également appelée « beam » ou faisceau de couverture dans la littérature. On parle également de spot d'émission dans la mesure où un faisceau couvre un spot correspondant à une zone géographique couverte par le faisceau.

Un tel satellite de diffusion SAT permet de définir des spots couvrant une zone géographique complexe telle qu'une partie de la surface terrestre pouvant former une ligne ou courbe et même une forme fermée.

La figure 2 représente une dizaine de spots d'émission provenant d'un même satellite SAT. Les spots $C_i$ sont numérotés de $C_1$ à $C_{10}$.

Une zone géographique donnée est couverte par un spot d'émission, notamment pour que des terminaux de cette zone géographique puissent recevoir, démoduler et décoder le signal en bande de base.

Les signaux sont émis dans des spots dédiés à une zone géographique définie. Ces derniers sont agencés de manière à couvrir des zones contiguës et définissent des surfaces ou des cônes adjacents. Le satellite SAT permet d'affecter à des spots adjacents des canaux en fréquences qui sont définis dans des bandes fréquentielles différentes et choisies de sorte à limiter les effets d'interférence, d'intermodulation, ou de cross-modulation pouvant générer des signaux parasites dans des spots voisins. Cependant, en prenant en compte les ressources du satellite et en optimisant la bande passante dans chaque spot, les fréquences utilisées pour un spot sont réutilisées pour un spot non immédiatement voisin mais adjacent à un spot voisin. Ainsi, selon l'exemple de la figure 2, les spots $C_1$, $C_3$, $C_5$, $C_7$ et $C_9$ partagent la même bande de fréquences B1 et les spots $C_2$, $C_4$, $C_6$, $C_8$ et $C_{10}$ partagent la même bande de fréquence B2 qui est différente de B1. Or un problème vient du fait que les émissions dédiées à un spot donné peuvent couvrir, même diminuées, une zone proche de la zone couverte par le spot donné.

Un problème nait, en effet, des interférences entre deux spots voisins mais non directement adjacents, par exemple $C_2$ et $C_4$, dont les signaux utiles émis dans l'un peuvent causer des interférences dans le spot voisin et réciproquement.

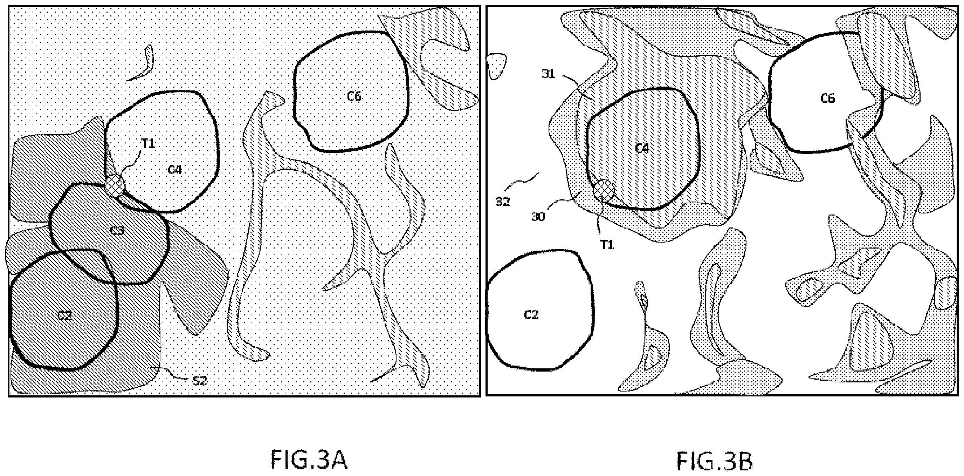

Lorsqu'un terminal est mobile, tel qu'un aéronef, et que ce dernier passe d'une zone à une autre, des effets d'interférences peuvent survenir au niveau du récepteur du terminal. La figure 3A illustre un passage d'un terminal $T_1$ mobile de la zone $C_4$ à la zone $C_3$ en direction de la zone C2.

Dans cette zone, le terminal $T_1$ est plus sensible aux signaux émis dans le spot $C_2$ qui peuvent être reçus dans le spot C4, dont la couverture est notée $S_{24}$. Les signaux sont vus par le terminal $T_1$ comme des interférences, notées $S_{24}$. Le terminal $T_1$ peut alors subir une dégradation importante des signaux reçus dans le canal de réception.

Un problème est que le niveau d'interférences mesuré peut parfois perturber les signaux dédiés à un terminal lorsqu'il est situé dans certaines positions d'un spot susceptibles d'être exposées à des interférences dues aux signaux destinés à des spots voisins.

Le document US 6 157 811 intitulé « Cellular/satellite communications system with improved frequency reuse » est connu de l'état de la technique.

## RESUME DE L'INVENTION

L'invention permet de pallier aux inconvénients précités.

L'invention est telle que définie dans les revendications indépendantes.

D'autres aspects additionnels sont décrits dans les revendications dépendantes.

## BREVE DESCRIPTION DES FIGURES

D'autres caractéristiques et avantages de l'invention ressortiront à la lecture de la description détaillée qui suit, en référence aux figures annexées, qui illustrent :

- figure 1 : une configuration d'un dispositif de l'invention ayant une fonction de Gateway pour communiquer avec un satellite de communication ;
- figure 2 : un ensemble de spots de transmission d'un satellite couvrant une zone géographique terrestre ;
- figure 3A: un exemple de représentation du niveau de la puissance des interférences générées par l'émission d'un signal utile dans le spot 2 et mesurées depuis le spot 4 sans la mise en oeuvre du dispositif de l'invention ;
- figure 3B : un exemple de représentation du niveau du rapport entre la puissance du signal utile reçu dans le spot 4 et de la puissance des interférences causées par le signal utile émis dans le spot 2 mesuré depuis le spot 4 sans la mise en œuvre du dispositif de l'invention;
- figure 4A : un exemple de représentation du niveau de la puissance des interférences générées par l'émission d'un signal utile dans le spot 2 et mesurées depuis le spot 4 avec une première mise en œuvre du dispositif de l'invention ;
- figure 4B : un exemple de représentation du niveau du rapport entre la puissance du signal utile reçu dans le spot $C_4$ et de la puissance des interférences causées par le signal utile émis dans le spot $C_2$ mesuré depuis le spot $C_4$ avec une première mise en œuvre du dispositif de l'invention ;
- figure 5A : un exemple de représentation du niveau de la puissance des interférences générées par l'émission d'un signal utile dans le spot $C_2$ et mesurées depuis le spot $C_4$ avec une seconde mise en œuvre du dispositif de l'invention ;
- figure 5B : un exemple de représentation du niveau du rapport entre la puissance du signal utile reçu dans le spot $C_4$ et de la puissance des interférences causées par le signal utile émis dans le spot $C_2$ mesuré depuis le spot $C_4$ avec une seconde mise en œuvre du dispositif de l'invention ;
- figure 6A : un exemple de représentation d'un aéronef situé dans une bordure d'un spot C4, l'aéronef étant représenté avec la superposition des niveaux de signaux issus de la puissance du signal utile reçu dans le spot $C_4$ et de la puissance des interférences causées par le signal utile émis dans le spot $C_2$ mesuré depuis le spot $C_4$.
- figure 6B : un exemple selon la figure 6A avec un traitement selon le procédé de l'invention ;
- figure 7 : un exemple d'étapes du procédé de l'invention.

## DESCRIPTION

### Passerelle

La figure 1 représente une passerelle de télécommunication 1 permettant de transmettre des données à un ensemble de spots géographiques notés $C_1$ à Cn dans la présente demande par l'intermédiaire d'un satellite de diffusion SAT. Dans l'exemple de la figure 1, six spots $C_1$ à $C_6$ sont représentés. Chaque spot géographique $C_i$ est adressé par un canal dans lequel un signal Si est émis. Le canal est notamment défini par une fréquence et une largeur de bande.

La passerelle de communication 1 comporte une antenne pour émettre un signal utile associé à une couverture géographique donnée, les signaux sont notés $S_{11}$ à $S_{NN}$ lorsqu'ils sont adressés respectivement aux spots $C_1$ à $C_N$ et reçus en ces spots. L'antenne ANT est associée à un modulateur MOD et possiblement un multiplexeur non représenté. Ces éléments d'émission forment l'émetteur E1. L'émetteur E1 peut comprendre, en outre, un amplificateur, des filtres, un codeur, un oscillateur et plus généralement tous les éléments permettant de générer une porteuse modulée comportant un signal en bande de base pour coder des données ou tout autre types de signaux. Selon un mode de réalisation, le dispositif comporte une pluralité de modulateurs permettant de moduler et générer une pluralité de signaux de sortie destinée à être émis par le satellite dans une pluralité de spots donnés.

Un signal RF est généré pour un spot donné. Selon un mode de réalisation, la passerelle 1 comprend un multiplexeur pour multiplexer les signaux RF et amplifier ces derniers afin de les émettre vers le satellite SAT.

En pratique la passerelle peut encoder dans un même canal de transmission différents signaux utiles associées à différents couvertures géographiques données par exemple à partir du multiplexeur.

Selon un mode de réalisation de l'invention, la passerelle 1 comporte au moins une mémoire M permettant de stocker des données de références et possiblement toutes données permettant d'être exploitées lors de l'établissement de communications de la passerelle 1 telles que des configurations d'émission, des données de cryptage ou des données d'encodage permettant d'établir des canaux de transmission, etc.

Selon un mode de réalisation, la mémoire M comprend des données d'étalonnage relatives au diagramme de rayonnement de l'antenne associées à une pluralité de positions géographiques ou de zones géographiques. Ces valeurs sont collectées lors de phases de test et d'étalonnage d'au moins une antenne du satellite SAT. Les valeurs sont normalisées à partir d'au moins un signal de référence $S_R$ émis par le satellite SAT. Selon un mode de réalisation, les valeurs caractérisant le diagramme d'au moins une antenne ANT comprennent des valeurs de puissances reçues $\Phi_R(POS_k)$ du signal de référence $S_R$ dans un ensemble de positions $POS_k$ ou de zones. En outre, les valeurs de références comprennent des valeurs de déphasage $\Phi_R(POS_k)$ de signaux reçus du signal de référence $S_R$ dans un ensemble de positions de référence $POS_k$ et/ou de zones au voisinage de position de référence.

Enfin, d'autres valeurs peuvent être collectées, mesurées ou calculées. A titre d'exemple, des valeurs de rapport signal à bruit S/N peuvent être mesurées et enregistrées sur un ensemble de positions géographiques $POS_k$.

Selon un autre exemple, qui peut être complémentaire aux précédents, des valeurs de rapports de signaux émis dans différents spots par le satellite et reçus en une même position, comme par exemple le rapport S44/S24 calculé aux points $POS_k$ dans le spot $C_4$, peuvent être mesurées et enregistrées. Les positions $POS_k$ peuvent être des positions prédéfinies lors de la définition du diagramme d'antenne par exemple à partir d'orientation de référence de l'antenne.

En outre, la passerelle 1 comporte des moyens de calcul, tel qu'un calculateur K, qui peuvent comprendre un microprocesseur. Ce dernier permet notamment d'effectuer des comparaisons de valeurs, des corrélations de signaux, des calculs de gain(s) ou de phase(s) à partir de données de référence et d'un algorithme prédéfini ou intelligent.

Selon un exemple de réalisation, la mémoire M et le calculateur K peuvent être situés dans un équipement tiers accessible par la passerelle, par exemple à partir d'une interface de communication. Selon un exemple, la mémoire M et le calculateur K utilisés pour effectuer certaines opérations peuvent être dans un serveur distant accessible par l'intermédiaire d'une connexion réseau.

Selon un mode de réalisation, l'émission des signaux vers le satellite est réalisée par une pluralité de transpondeurs partageant leur plan d'émission et les fréquences utilisées afin de limiter les interférences dans les liaisons montantes.

### Satellite

La figure 1 représente un Satellite SAT comportant des moyens de réception de signaux provenant de la passerelle 1 telle qu'une antenne de réception, des moyens pour traiter les signaux reçus à diffuser selon des zones géographiques, des amplificateurs de puissance et au moins une antenne d'émission. Le satellite SAT est donc préférentiellement un satellite de diffusion, notamment de contenu multimédia qui est situé à une orbite géostationnaire.

Un intérêt du procédé et du dispositif de l'invention est qu'ils peuvent l'un et l'autre être mis en œuvre avec un satellite déjà en orbite sans nécessiter d'adaptation particulière. En effet, l'invention se rapporte à la passerelle et aux procédés permettant de prendre en compte des signaux de correction pour générer des signaux vers le satellite qui soient déjà corrigés.

### Spot

La figure 3A représente les spots $C_2$, $C_3$, $C_4$ et $C_6$. Les spots $C_2$, $C_4$ et $C_6$ sont couverts par une même bande de fréquence $B_2$ définissant un canal de transmission. Dans le spot $C_3$ représenté et dans les spots $C_1$, $C_5$, $C_7$ non représentés sur la figure 3A, la bande spectrale est notée B1. Dans la réalité des faits, lorsqu'une telle solution est déployée les spots adjacents se recouvrent toujours partiellement, mais les gabarits de filtres assurent une diminution de niveaux de puissance reçue dans les spots adjacents répondant aux spécifications requises.

Par ailleurs, les bandes B1 et B2 sont généralement déterminées pour qu'il n'y ait pas de recouvrement spectral entre deux spots adjacents. Ainsi, l'architecture permet d'assurer que les émissions dans une bande d'un spot donné ne perturbent pas les transmissions d'un spot directement adjacent au spot donné.

Chaque zone géographique couverte par un spot d'émission $C_i$ est également notée $C_i$ pour la désigner. Ainsi, dans la présente description, on confond le spot d'émission et la zone couverte par ledit spot pour simplifier la description. La zone géographique comprend des zones aériennes et des zones terrestres comprises dans le cône d'émission du spot. Chaque zone géographique considérée est couverte pour que des terminaux puissent recevoir, démoduler et décoder le signal en bande de base.

### Interférences et bruit

Dans chaque spot, la « puissance isotrope rayonnée équivalente » PIRE, et connue sous l'acronyme « EIRP » dans la terminologie anglosaxonne, est optimisée de sorte que le signal soit reçu par tous les terminaux d'un spot donné. Chaque terminal démodule et décode les signaux reçus pour traiter le signal en bande de base.

Le procédé de l'invention permet de traiter en partie les interférences induites par les émissions dans un spot voisin d'un spot donné mais non directement adjacent à ce dernier, lesdites émissions partageant la même bande de fréquence que le spot considéré. Afin d'illustrer ce propos, la figure 3A permet de mieux comprendre le cas de figure exposé.

Dans l'exemple de la figure 3A, les émissions du satellite SAT vers le spot $C_2$ sont notées $S_2$. Ces émissions couvrent naturellement le spot $C_2$ mais s'étendent également au-delà comme cela est illustré par la bande hachuré $S_2$. La partie du signal de $S_2$ qui est émise par le satellite et reçue dans le spot $C_2$ est notée $S_{22}$ et la partie du signal de $S_2$ qui est émise par le satellite et reçue dans le spot $C_4$ est notée $S_{24}$, elle correspond à un signal résiduel parasite.

Les puissances du signal $S_2$ s'étendant au-delà du spot $C_2$ sont réduites mais constituent un signal résiduel de faible puissance.

En prenant l'exemple de la figure 3A, le procédé de l'invention comprend une étape dans laquelle la détermination des signaux à émettre dans un spot donné $C_4$ est effectuée. Le signal utile $S_{44}$ est connu et un signal correctif $S_{24C}$ est calculé grâce au procédé de l'invention. Le signal correctif $S_{24C}$ est calculé à partir du signal émis $S_{22}$ destiné à être émis dans un spot voisin $C_2$ et qui constitue dans la région du spot $C_4$ une source d'interférences. Ce dernier signal peut alors se noter $S_{24}$, signifiant qu'il est destiné au spot $C_2$ mais qu'une partie du signal interfère au voisinage du spot $C_4$ ou dans le spot C4. $S_{22}$ est donc le signal émis à destination du spot $C_2$ et reçu au spot $C_2$ et le signal $S_{24}$ est le signal émis à destination du spot $C_2$ et reçu en une position donnée du spot $C_4$.

Le tableau suivant permet de fixer les références choisies :

| | Signal émis dans le spot $C_1$ | Signal émis dans le spot $C_2$ | Signal émis dans le spot $C_4$ | Signal émis dans le spot $C_V$ |
|---|---|---|---|---|
| Signal reçu | $S_{11}$ | $S_{21}$ | $S_{41}$ | $S_{v1}$ |

| dans le spot $C_1$ | | | | |
|---|---|---|---|---|
| Signal reçu dans le spot $C_4$ | $S_{14}$ | $S_{24}$ | $S_{44}$ | $S_{v4}$ |
| Signal reçu dans le spot $C_V$ | $S_{1v}$ | $S_{2v}$ | $S_{4v}$ | $S_{vv}$ |

Dans les exemples de réalisations des figures 3A à 5B, les spots $C_2$ et $C_4$ sont choisis comme des spots considérés comme voisins, même si non directement adjacents, et partageant une même bande de fréquence. $C_4$ est le spot dans lequel le signal utile est envoyé, le terminal est situé en bordure du spot $C_4$ et les signaux utiles émis dans le spot $C_2$ sont considérés comme de potentielles interférences à la position du terminal.

Dans la considération de la généralisation des spots voisins, les spots $C_1$ et $C_V$ sont choisis comme des spots considérés comme voisins, même si non directement adjacents, et partageant une même bande de fréquence. $C_V$ est le spot dans lequel le signal utile est envoyé, le terminal est situé en bordure du spot $C_V$ et les signaux utiles émis dans le spot C1 sont considérés comme de potentielles interférences à la position du terminal.

Le terminal $T_1$, qui passe du spot $C_4$ au spot $C_3$ mais qui est encore dans la bordure intérieure du spot $C_4$, est configuré pour recevoir des signaux $S_{44}$ émis dans la bande B2. On constate que la zone couverte par les émissions $S_2$ émises dans la même bande B2 est susceptible de recevoir des signaux destinés à des spots voisins et perçues comme des interférences pour le terminal $T_1$ recevant un signal $S_{44}$. On note $POS(T_1) = POS_1$ la position du terminal $T_1$.

En conséquence, le rapport $S_{44}/S_{24}$, au point où se situe le terminal $T_1$, est dimensionnant pour qualifier les perturbations liées aux interférences des signaux reçus en bordure du spot $C_4$. Si on nomme $I_1$ les interférences en ce point, $I_1 = S_{24}(POS_1)$, en considérant uniquement les interférences provenant des signaux du satellite.

Si on note N le bruit radio, on peut considérer le rapport signal à Bruit dans le spot $C_4$ : $S_{44}/N$. En considérant, les perturbations liées aux interférences reçues à la position $POS_1$, on peut considérer la dégradation général du signal $S_{44}$ comme le rapport $S_{44}/ (N+I_1)$.

**Signaux de référence / digramme d'antenne**

Le procédé de l'invention comprend la prise en compte de valeurs connues de puissances de signal reçu dans certaines positions définies par rapport à une orientation d'antenne donnée du satellite. On parle de diagramme d'antenne ou de cartographie de puissance émise ou reçue d'une antenne.

Ainsi, lorsqu'un terminal est dans une position $POS_1$, une puissance reçue pour un niveau référence de puissance émise est connue par l'enregistrement du diagramme d'antenne. Ce diagramme permet de connaitre les puissances reçues de signaux émis pour un signal référence en chaque point d'un spot. Ainsi, lorsque le terminal $T_1$ évolue d'une première position $POS_1$ à une seconde position $POS_2$, la puissance reçue d'un même signal émis par l'antenne du satellite SAT a pu évoluer.

Le diagramme d'antenne peut être élaboré de manière à associer pour chaque niveau de puissance mesurée en chaque point d'étalonnage, une valeur de phase du signal reçu.

Ainsi, le diagramme d'antenne du satellite SAT, qui est élaboré par exemple lors d'un étalonnage préalable à la mise en route du satellite de diffusion, permet d'obtenir un ensemble de valeurs $\{P_i ; \Phi_i\}$ pour un ensemble de positions POSi.

On note :

- $P_2(POSi)$: la puissance du signal reçu $S_2$ au point POSi et ;
- $\Phi_2(POSi)$ : la phase du signal reçu à la position POSi.

Dans le document on parle indifféremment du signal $S_i$ et de sa puissance reçue $P_i$ au point POSi. « Si » désigne donc tout aussi bien la puissance du signal au point $POS_i$.

Les diagrammes d'antenne peuvent être réalisés pour les signaux émis dans chaque spot. Ainsi, on peut mesurer pour un signal de référence $S_{2R}$ ou $S_{4R}$ donné, une puissance de référence $P_{R(POSk)}$ reçue en une position $POS_k$ du spot $C_2$ ou une région du voisinage du spot $C_2$. Dans le cas de l'invention, un intérêt est de connaitre la puissance reçue à une position du spot $C_4$ d'un signal de référence $S_R$ émis à destination du spot $C_2$. On peut alors nommé un signal de référence destiné au spot $C_4$ le signal $S_{4R}$ et un signal de référence destiné au spot $C_2$ le signal $S_{2R}$. Le signal de référence $S_{2R}$ peut être reçu au voisinage du spot $C_4$, à quel cas il est perçu comme un signal interférant.

Compte tenu que les diagrammes d'antenne sont connus pour chaque spot, il est alors possible de calculer et même de mesurer un diagramme similaire du rapport signal sur interférences : S/I à une position donnée, les interférences étant générées par un signal à destination d'un autre spot que le spot dans lequel est reçu le signal utile.

Par exemple, les rapports $S_{44R}/S_{24R}$ pour des signaux de référence émis par l'antenne du satellite SAT peuvent être déterminés ou évalués pour un ensemble de positions $POS_i$ comprises dans le spot $C_4$ et dans son voisinage proche.

Si on considère qu'une mémoire comporte des données d'étalonnage du/des diagramme(s) d'antenne dont :

- des puissances reçues de signaux de référence $S_{44R}$ destinés au spot $C_4$ et reçus en des points du spot $C_4$ et à son voisinage et ;
- des puissances reçues de signaux de référence $S_{24R}$ destinés au spot $C_2$ et reçus en des points du spot $C_4$ ou dans son voisinage,

alors, les valeurs des rapports $S_{44R}/S_{24R}$ peuvent être déduites dans un certain nombre de positions géographiques $POS_k$ données suite à l'établissement du/des diagramme(s) d'antenne.

Un avantage de la passerelle ou du procédé de l'invention est de tirer profit des valeurs connues de puissances émises rayonnées par les antennes lors de leur étalonnage pour établir les diagrammes d'antenne. Ces valeurs sont réutilisées au niveau de la génération des signaux par la passerelle pour chaque porteuse adressée à un spot donné en fonction d'une position connue d'un terminal et d'un niveau supposé d'interférences à cette position.

A cette fin, le procédé et la passerelle 1 de l'invention permettent de prendre en compte une valeur de puissance $P_{2R}(POS_k)$ du signal $S_{2R}$ et de phase $\Phi_{2R}(POS_k)$ à la position $POS_k$ et émis par l'antenne du satellite SAT à destination du spot $C_2$. Le signal de référence $S_{2R}$ permet alors de construire un signal correctif $S_{44C2}$ émis avec le signal $S_{44}$ à destination du spot $C_4$. Le signal ainsi émis est noté : $S_{44}' = S_{44} + S_{44C2}$.

Un avantage est que le procédé de l'invention peut être mis en œuvre dans la passerelle 1 de l'invention sans modification des composants et sans mise à jour particulière des logiciels du satellite SAT ou du terminal $T_1$.

Un avantage d'un mode de réalisation de l'invention est que la minimisation du rapport S/(N+I) intervient dans l'air par recomposition des signaux émis par la passerelle 1 et donc par ceux qui vont être retransmis par le satellite à destination du sol.

Préalablement, lors de l'étalonnage de l'antenne, le niveau d'interférence causé par le signal utile $S_{24}$ au niveau de la position POS1 a pu être évalué à partir de signaux de référence.

Selon un mode de réalisation de l'invention, lors de la mise en œuvre du procédé de l'invention, le calculateur a, par exemple, permis d'estimer qu'un seuil avait été franchi en comparant les valeurs de rapports de puissances à un point donné afin de déclencher automatiquement la génération d'un signal correctif.

Le procédé comprend alors le calcul de la correction à appliquer pour compenser localement les interférences produites par le signal parasite S24 et génère ledit signal correctif $S_{44C2}$.

Le procédé comprend alors la génération d'un signal combiné entre le signal utile $S_{44}$ et le signal correctif $S_{44C2}$ à destination du satellite SAT pour être diffusé dans le spot $C_4$. Ce signal résultant d'une combinaison permet de réduire les interférences causées par le signal $S_{24}$.

**Etapes du procédé**

**- Prise en compte d'une position d'un terminal**

Plus généralement, le procédé est décrit au regard de la figure 7 dans laquelle une position $POS_1$ est reçue par la passerelle 1. Cette position peut être reçue régulièrement par l'intermédiaire d'un équipement collectant un ensemble de positions de terminaux. Selon un mode de réalisation, le procédé de l'invention comporte une étape de réception et d'analyse d'un ensemble de positions de terminaux mobiles.

Le procédé permet de détecter si une position est dans une zone d'un spot, par exemple situé en bordure dudit spot, c'est-à-dire dans une zone susceptible d'être perturbée par des interférences provenant d'une porteuse émise par le satellite et destinée à un autre spot. L'étape est noté DETECT $POS_1$ sur la figure 7. Cette étape permet donc de discriminer des positions de terminaux pouvant être susceptibles de perturbations. Lorsqu'un terminal est situé au centre d'un spot, la puissance reçue du signal destiné à ce spot est telle que le rapport S/I est suffisamment grand pour que le procédé de l'invention n'applique pas de signal correctif. En conséquence, l'analyse de la position d'un terminal est déterminante pour l'application ou non du procédé de l'invention.

**- Consultation des données de références**

Le procédé comprend alors une étape de consultation de données de références dans une base de données référençant un ensemble de valeurs d'étalonnage. Cette étape est notée EXPL (ENSr) sur la figure 7. Cette étape permet d'exploiter au moins une valeur de puissance reçue dans une position proche ou identique à la position $POS_1$ du terminal. Les valeurs de puissances reçues exploitées concernent celles d'un signal de référence destinée à un autre spot que celui dans lequel le terminal se situe et susceptible de causer des interférences au voisinage de ce point. C'est le cas d'un signal destinée au spot $C_2$ et perturbant les signaux utiles en bordure du spot $C_4$. En outre, les valeurs concernent également les puissances reçues d'un signal de référence destiné au spot $C_4$ et dont on connait la mesure en bordure du spot $C_4$. Ces deux dernières valeurs de puissances nous permet d'exploiter un rapport de référence S/I en bordure du spot $C_4$.

Selon un mode de réalisation, le procédé comporte une étape DETECT SPOT INT permettant de discriminer le spot potentiellement le plus interférant selon la position du terminal T1. Cette étape peut être effectuée conjointement à l'étape d'exploitation des valeurs de références EXPL (ENSr). Une segmentation des zones peut être par exemple préétablie permettant d'associer par exemple une zone en bordure d'un spot donnée à un spot voisin dont les émissions sont potentiellement perturbatrices.

Le signal $S_1$ peut causer des interférences aux signaux reçus $S_{VV}$ d'un terminal $T_1$ situé en une position $POS_1$ d'un spot voisin Cv. Le signal $S_1$ est alors perçu comme un signal interférent, il est noté $S_{1V}$, à la position $POS_1$ du spot voisin $C_V$ (voir les notations du tableau ci-dessous).

Afin de mesurer si des interférences peuvent se produire dans la région proche du terminal $T_1$, le procédé permet donc d'exploiter avantageusement les rapports de puissances de signal sur interférence S/I au point $POS_1$ qui sont connus pour un signal de référence $S_R$ ayant permis de définir le diagramme d'antenne.

De la même manière, dans le cas général, les rapports de puissances entre :

- la puissance d'un signal de référence $S_{VVR}$ émis par le satellite et destiné au spot voisin Cv et ;
- la puissance d'un signal de référence $S_{1VR}$ destiné à un spot $C_1$ voisin du spot Cv et susceptible de créer des interférences au voisinage du point $POS_1$, la position $POS_1$ étant située dans le spot Voisin Cv,

peuvent être définis et exploités puisque ces rapports peuvent être déterminés.

On note $P_1(POS_1)$, la puissance du signal $S_1$ au point $POS_1$ situé dans le spot Cv, c'est-à-dire $S_{1V}$. On note

$Pv(POS_1)$ la puissance du signal $S_v$ au point $POS_1$, alors le rapport $P_1/Pv(POS_1)$, également noté $S_{11}/S_{1v}$ permet d'évaluer si une action correctrice doit être menée ou non.

**Signal correcteur**

Le procédé de l'invention permet alors de générer un signal correcteur $S_{VVC1}$ destiné à être émis dans le spot Cv. Cette étape est notée GEN $S_{VVC1}(Cv)$ sur la figure 7, $S_{VVC1}$ désigne le signal correcteur émis à destination du spot $C_V$ pour corriger les effets d'interférences causés par le signal $S_{1V}$. Cette étape permet de générer une réplique du signal $S_1$ en adaptant son amplitude et sa phase pour obtenir un effet d'annulation des interférences au voisinage de la position $POS_1$ dans le spot Cv, ou tout du moins une diminution de leurs effets. On peut parler également d'interférences destructives du signal causant des interférences au voisinage de la position $POS_1$.

Le signal correcteur $S_{VVC1}$ est donc construit à partir du signal de référence $S_{11R}$ destiné au spot $C_1$ en lui appliquant une amplitude sensiblement égal à l'amplitude du signal $S_{11}$ émis vers le spot $C_1$ ou autrement dit égal à l'amplitude du signal $S_{1v}$ émis vers Cv. En outre, le signal correcteur $S_{VVC1}$ est déphasé de 180° vis-à-vis de la phase du signal de référence $S_{1VR}$ choisie dans l'ensemble des valeurs de références ENSr à la position $POS_1$, ou une position proche. Selon un mode de réalisation, le procédé ne prend pas en compte de correction de phase à appliquer pour passer du signal de référence $S_{1VR}$ au signal émis $S_{1V}$.

On rappelle que les valeurs de l'amplitude correctrice et de la phase correctrice sont calculées à partir des données de références d'un signal de référence $S_R$, dont on connait alors une amplitude de référence et un déphasage de référence en un point donné. Connaissant la porteuse réellement transmise à un instant donné et la configuration du satellite, les paramètres permettant de transposer les données relatives au signal de référence $S_{1VR}$ à celles relatives au signal utile $S_{1V}$ émis peuvent alors être facilement déterminées.

Selon des modes de réalisation améliorés, le déphasage introduit dans le signal correctif Sivc prend en considération des effets des déphasages du signal $S_{1V}$ dans la chaine d'émission pour que l'annulation soit maximale à la position $POS_1$.

Le procédé de l'invention comporte enfin une étape de génération du signal destiné au spot $C_v$ : $S_{vv}'$ qui comporte une combinaison du signal initialement destiné au spot $C_v$ : $S_{vv}$ et du signal correctif $S_{VVC1}$.

Le signal émis par la passerelle est donc un signal combiné :

$$S_{vv}' = S_{vv} + S_{VVC1}$$

où $S_{vv}$ est le signal initialement émis vers le spot $C_V$ et $S_{VVC1}$ est le signal correcteur visant à supprimer une partie des interférences à la position $POS_1$ provenant du signal S1 émis dans le spot $C_1$.

La combinaison peut être réalisée une fois les signaux émis chacun indépendamment par construction cohérente dans l'air.

**Prise en compte d'ajustements vis-à-vis des valeurs de référence**

Selon un mode de réalisation, lorsque des valeurs de référence ENSr de puissances et de phases ont été mesurées lors d'une opération d'étalonnage, il est alors possible d'appliquer un paramètre d'exploitation des transmissions visant à adapter les valeurs de références à un contexte d'usage.

A cette fin, un dispositif radio au sol peut être associé à la passerelle 1 afin de mesurer dynamiquement la phase $\Phi_{VV}$ du signal reçue (ou $\Phi_{44}$ dans le cas de la figure 3A) et la puissance du signal reçue $S_{VV}$ (ou $S_{44}$ dans le cas de la figure 3A) en au moins un point géographique POSi. Cette mesure permet de connaitre la phase et la puissance réelles lors de la phase d'exploitation du satellite en un point donné. Un inconvénient est qu'il est nécessaire d'effectuer la mesure au point souhaité.

Toutefois, quelques mesures effectuées en des points choisis permettent d'adapter au besoin les valeurs des données de référence avec un des valeurs mesurées permettant d'affiner les données obtenues lors de l'étalonnage de l'antenne.

Dans le cas d'exemple de la figure 3A, considérons un premier déphase de référence $\Phi_{2R}(POS_i)$ au point $POS_i$ de 70° mesuré lors de l'élaboration du diagramme d'antenne pour les émissions dans le spot $C_2$ et un second déphase de référence $\Phi_{2R}(POS_k)$ au point $POS_k$ de 30° mesuré lors de l'élaboration du diagramme d'antenne pour les émissions dans le spot C2.

Si le dispositif radio est positionné à la position $POS_k$ et qu'une valeur effective du déphasage est mesurée de 33° au lieu de 30° lors d'une réception de signal émis par le satellite SAT à destination du spot $C_2$, on constate qu'une erreur de 3° est présente dans la phase du signal de réception $S_{22}(POS_k)$ vis-à-vis à celle du signal de référence $S_{22R}(POS_k)$. Ce décalage peut être lié à la situation du satellite SAT, sa configuration ou un contexte d'émission donné.

Il est alors possible d'extrapoler cette correction de 3° sur la mesure de la phase $\Phi_{2R}(POS_i)$ au point $POS_i$ qu'on peut supposer dans une même région géographique que le point $POS_k$.

Ainsi, la passerelle 1 de l'invention peut prendre en compte un paramètre de correction dynamique en plus d'un paramètre de correction statique uniquement calculé à partir des valeurs de références résultantes d'un pré-étalonnage du diagramme d'antenne.

La figure 3B représente le rapport signal sur interférence, noté S/ I, au niveau du spot $C_4$ en considérant que les interférences sont dues aux émissions dans le spot $C_2$, il peut donc également être noté $S_{44}/S_{24}$. La zone 31 désigne une zone dans laquelle le rapport S/I est supérieur à un seuil donné pour lequel les transmissions sont jugées satisfaisantes. La zone 30 désigne une zone dans laquelle les interférences sont telles que le rapport S/I est inférieur à un seuil pour lequel on considère que les interférences dégradent les transmissions et qu'un signal correctif devrait être généré selon le procédé de l'invention. Dans la zone 32, le rapport S/I est en théorie faible.

Le cas de la figure 3B représente donc un terminal $T_1$ dans une position pour laquelle un signal correctif pourrait être appliqué pour améliorer la qualité du signal reçu. Or, on peut noter qu'une conséquence de l'application d'un tel signal correctif est qu'il s'applique à toute la région du spot $C_4$.

Potentiellement, l'application d'un signal correctif $S_{44C1}$ améliorant la qualité du signal reçu $S_{44}$' à la position $POS_1$ du terminal $T_1$ peut détériorer les transmissions dans d'autres positions du SPOT $C_4$. L'application du signal correctif peut donc prendre en compte un critère de compromis entre l'amélioration obtenue à la position $POS_1$ et la détérioration à une ou plusieurs autres positions du spot $C_4$.

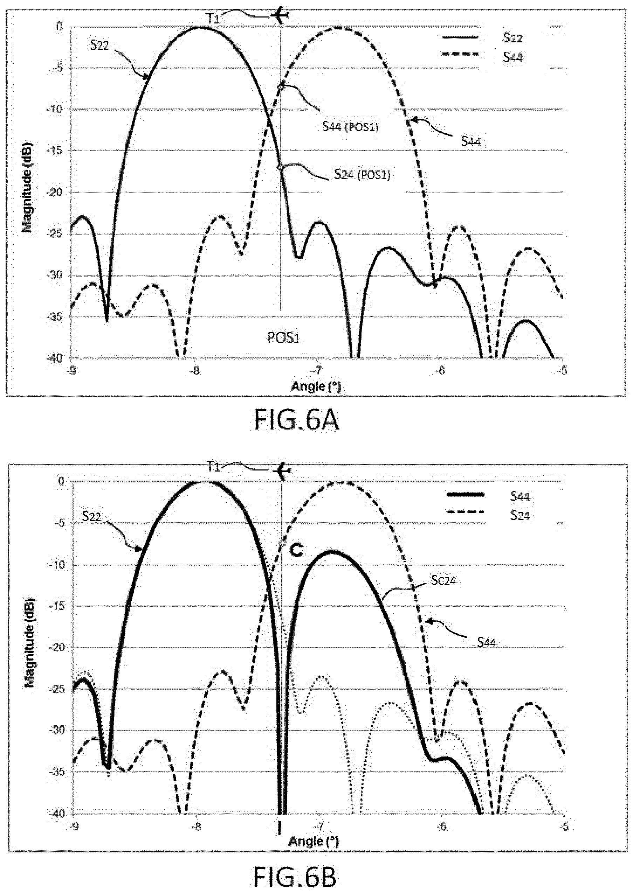

La figure 6A représente la superposition des courbes de puissances de signaux reçus selon un angle mesuré par rapport au satellite. La direction du terminal $T_1$ dans le repère du satellite peut être définie par rapport à un angle de référence d'orientation de l'antenne. En première approximation, une position d'un aéronef dans le ciel est sensiblement équivalente à une position calculée sur la terre compte tenu de l'altitude du satellite généralement positionné à une orbite géostationnaire.

Deux courbes représentent les signaux émis par le satellite dans les spots $C_2$ et $C_4$, respectivement $S_2$ et $S_4$. Les signaux représentent des lobes qui se recouvrent partiellement. Dans le cas de la figure 6A, l'aéronef $T_1$ est dans une position $POS_1$ dans le spot $C_4$. Les signaux $S_{44}$ émis et reçus dans le spot $C_4$ sont susceptibles d'être perturbés par les signaux émis dans le spot $C_2$, le signal considéré comme interférent est noté $S_{24}(POS_1)$.

A la lecture de la figure 6A, on comprend que le rapport $S_{44}/S_{24}$ est faible à la position de l'aéronef $POS_1$.

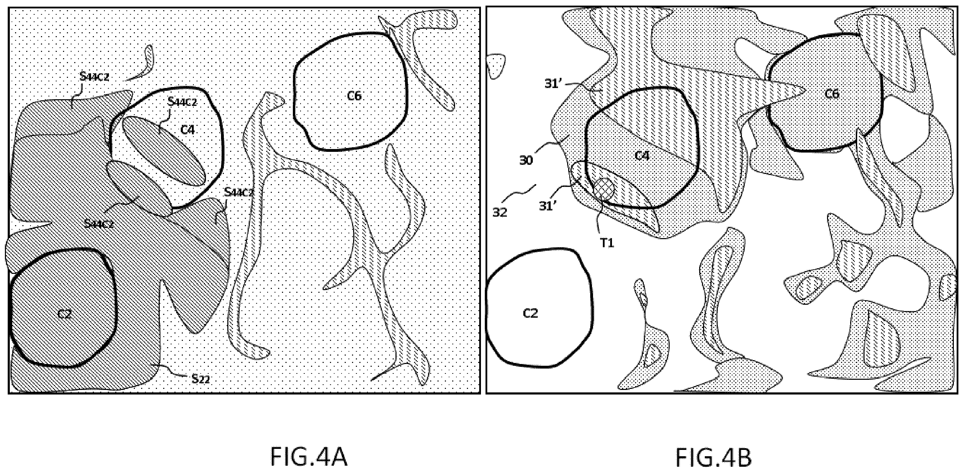

La figure 4A représente un cas dans lequel, le signal correctif $S_{44C2}$ est appliqué. Ce signal correctif provoque naturellement une extension de couverture du signal $S_{22}$. La figure 4A illustre qu'une partie du signal $S_{44C2}$ est générée au milieu du spot $C_4$ ou en dehors de ce dernier. Ceci est tout à fait normal du fait que le signal correctif est envoyé dans le spot $C_4$.

La figure 4B représente le rapport S/I, c'est-à-dire le rapport-$S_{44}$'/$S_{24}$. On remarque qu'en bordure du spot $C_4$ le terminal $T_1$ est dans une portion 31' ayant un rapport supérieur à un seuil. En conséquence, l'introduction du signal correctif a permis d'améliorer la réception du signal utile $S_{44}$ au niveau du terminal $T_1$. En revanche, on constate que la portion 30 dans laquelle le signal utile du spot $C_4$ est transmis est dégradée du fait de la présence du signal correctif. On considère dans ce mode de réalisation, que la situation du terminal prime sur l'ensemble des positions du spot.

La figure 6B représente les lobes des signaux de la figure 6A après l'application du procédé de l'invention. L'application du procédé de l'invention permet donc d'obtenir un meilleur rapport S/I à la position $POS_1$.

On remarque également que la génération du signal correcteur $S_{44C2}$ engendre un lobe dans le spot $C_4$. Le procédé de l'invention permet donc éventuellement de prendre en compte un paramètre de décision afin d'appliquer ou non le signal correcteur. A titre d'exemple, la présence d'autres terminaux dans le spot $C_4$ peut être prise en compte afin de ne pas générer de signal correcteur. Selon un mode de réalisation, le nombre de terminaux et leur position dans un spot peut être pris en compte.

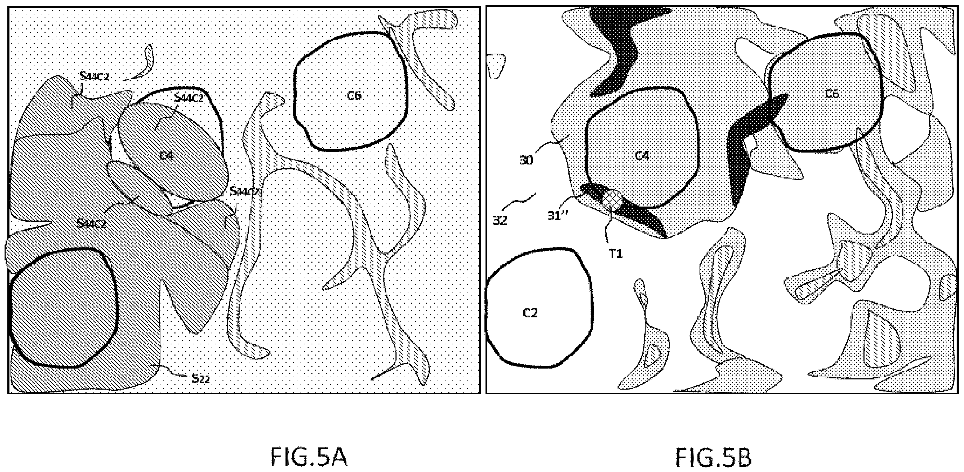

Les figures 5A et 5B représentent des cas de figures dans lesquels le signal correctif permet d'obtenir un très bon rapport S/I dans la zone 31", en bordure du spot $C_4$. Le signal correcteur $S_{44C2}$ permet, dans ce cas de figure, d'obtenir un meilleur résultat, c'est-à-dire une réception à la position $POS_1$ d'un signal utile $S_{44}$' moins perturbé par le signal $S_{24}$.

Toutefois en comparant les figures 4B et 5B, on remarque dans la figure 5B qu'une zone 31' supérieure de la figure 4B a disparu et que la zone 30 recouvre une plus grande partie du spot $C_4$ dans la figure 5B. On comprend alors qu'un meilleur traitement à la position $POS_1$ peut dégrader la qualité du signal reçu dans d'autres positions du spot $C_4$.

Selon un mode de réalisation, une optimisation peut être réalisée en prenant en considération deux spots voisins. Par exemple, le traitement des signaux émis dans le spot $C_4$ peut prendre en compte les émissions, considérées comme génératrices d'interférences, dans les spots $C_2$ et $C_6$. On rappelle que ces dernières émissions sont dans la même bande de fréquence que les émissions destinées au spot $C_4$. Selon un mode de réalisation l'émission du signal $S_{44}$ peut alors être réalisée conjointe à la génération de deux signaux correcteurs : $S_{44C2}$ et $S_{44C6}$. Cette configuration peut être choisie lorsque des corrections doivent être appliquées au même moment à deux positions différentes, par exemple à la position $POS_1$ et la position $POS_2$. Cette configuration engendre généralement une détérioration du signal reçu aux autres positions du spot C$_4$. Notamment, dans les positions autres que la position POS$_1$ et son voisinage et la position POS$_2$ et son voisinage. Un compromis doit être établi en prenant en considération l'environnement des terminaux du spot C$_4$.

Un avantage de l'invention est de permettre un traitement « surmesure » du signal émis selon une ou plusieurs positions de terminaux. Un autre avantage de l'invention est de gérer des terminaux prioritairement à d'autres afin de s'assurer que les transmissions pour un terminal prioritaire puissent être établies.

Enfin, un autre avantage est de tirer profit d'un diagramme d'antenne connu afin de générer un signal correctif dynamiquement en fonction d'une position d'un terminal.

Un autre avantage est permettre une réduction locale des interférences sans intervention sur les terminaux ou le satellite. L'invention nécessite des modifications uniquement sur la passerelle.

**Revendications**

1. Dispositif de communication (1) comportant un émetteur (E1) et étant destiné à émettre une pluralité de signaux (S$_1$,..., S$_N$) vers un satellite (SAT) à partir de l'émetteur (E1), ledit émetteur (E1) comportant au moins une antenne (ANT) d'émission et un modem (MOD), chacun des signaux émis (S1,... Sn) par le dispositif (1) étant destiné à être adressé à un spot d'émission donné (C$_1$, ..., C$_N$) via le satellite (SAT), un spot d'émission (C1, ..., Cn) ayant une couverture géographique prédéfinie d'une antenne du satellite (SAT), ledit dispositif (1) comportant un calculateur (K) et une mémoire (M) comportant un ensemble de valeurs de référence (ENSr) de puissances P$_R$(POS$_k$) et de phases Φ$_R$(POS$_k$) d'au moins un premier signal de référence S$_R$ reçu en différents points POS$_k$ d'au moins un spot d'émission, un premier signal utile (S$_{11}$) étant émis dans un premier spot (C$_1$) et étant susceptible de générer un signal interférent (S$_{1v}$) dans un spot voisin (C$_v$), l'émetteur (E1) étant adapté pour générer au moins un signal voisin utile (S$_{vv}$) destiné à être émis dans un spot voisin (C$_v$) du premier spot (C$_1$) et étant susceptible d'être perturbé par le signal interférent (S$_{1v}$), l'émetteur (E1) étant adapté pour générer un premier signal correctif (S$_{VVC1}$) à partir du premier signal émis (S$_1$) et au moins une première valeur de phase Φ$_R$(POS$_1$) et une première valeur de puissance P$_R$(POS$_1$) de l'ensemble de valeurs de référence (ENSr), lesdites valeurs de phase et de puissance étant choisies en fonction d'au moins une position géographique déterminée (POS$_1$) dans le spot voisin (Cv), ledit émetteur (E1) étant adapté pour émettre une combinaison du premier signal correctif (S$_{VVC1}$) et du signal voisin utile (S$_{vv}$) afin de générer un signal voisin corrigé (S$_{vv}$') vers le satellite (SAT), ledit signal voisin corrigé (S$_{vv}$') étant destiné à être émis dans le spot voisin (C$_v$).

2. Dispositif de communication selon la revendication 1, **caractérisé en ce qu'**au moins une partie du premier signal (S$_{11}$) et au moins une partie du signal voisin (S$_{vv}$) sont compris dans une même bande de fréquences.

3. Dispositif de communication (1) selon l'une quelconque des revendications 1 à 2, **caractérisé en ce que** l'ensemble de valeurs de référence (ENSr) comporte, pour un ensemble de positions données POS$_k$ couvrant au moins un spot voisin (C$_v$) d'un premier spot (C$_1$) :

   ▪ une valeur de puissance reçue P$_R$(POS$_k$) d'un premier signal de référence (S$_R$) pour chacune des positions données POS$_k$,
   ▪ une valeur de phase Φ$_R$(POS$_k$) du premier signal de référence (S$_R$) reçu pour chacune des positions données POS$_k$ ;
   ▪ un rapport de référence entre une puissance d'un signal de référence (S$_{VVR}$) émis dans le spot voisin (C$_v$) et une puissance d'un second signal de référence (S$_{1VR}$) émis dans le premier spot (C$_1$), ledit rapport étant calculé pour l'ensemble des positions données POS$_k$.

4. Dispositif de communication (1) selon la revendication 3, **caractérisé en ce que** le premier signal correctif (S$_{VVC1}$) est déterminé en fonction des valeurs de références P$_R$(POS$_k$), Φ$_R$(POS$_k$) de la position géographique déterminée (POS$_1$) et d'une pluralité de positions POS$_k$ supplémentaires dans le spot voisin (C$_v$).

5. Dispositif de communication selon l'une quelconque des revendications 1 à 4, **caractérisé en ce que** les valeurs du rapport de référence inférieures à au moins un seuil pour un ensemble de positions données d'un même secteur géographique définissent au moins une zone critique d'un spot.

6. Dispositif de communication selon la revendication 5, **caractérisé en ce que** le calculateur (K) est adapté pour déterminer automatiquement une consigne de génération d'un premier signal correctif (S$_{VVC1}$) lorsque la position géographique déterminée POS$_k$ est dans une zone critique ou lorsque la valeur du rapport de référence est inférieure à un seuil à la position géographique déterminée.

7. Dispositif de communication selon la revendication 6, **caractérisé en ce qu'**en outre, le calculateur (K) est adapté pour conditionner la génération de la consigne d'un premier signal correctif ($S_{VVC1}$) à la valeur d'un critère calculé en fonction des valeurs de puissances et/ou de phases du signal utile ($S_{1v}$) émis dans le spot voisin (Cv) et du signal utile ($S_{11}$) émis dans le premier spot ($C_1$) par l'émetteur E1.

8. Dispositif de communication selon la revendication 7, **caractérisé en ce que** le calculateur (K) est adapté pour déterminer automatiquement les valeurs de puissances et/ou de phases du signal utile ($S_{vv}$) émis dans le spot voisin ($C_v$) et du signal utile ($S_{11}$) émis dans le premier spot (C1) par l'émetteur E1 en fonction de la proximité de la position géographique déterminée avec des positions $POS_k$ auxquelles le rapport de référence est inférieur à un seuil.

9. Dispositif de communication selon l'une quelconque des revendications 1 à 8, **caractérisé en ce que** le calculateur (K) est adapté pour générer un signal correctif ($S_{VVC1}$) à la réception d'une information indiquant la présence d'un terminal ($T_1$) à proximité d'une position géographique déterminée ($POS_1$).

10. Dispositif de communication selon l'une quelconque des revendications 1 à 9, **caractérisé en ce que** la phase du premier signal correctif ($S_{VVC1}$) correspond sensiblement à la phase opposée de la phase d'un signal de référence ($S_{1VR}$) reçu à la position géographique donnée (POS1) ou sensiblement proche et enregistrée dans la mémoire.

11. Dispositif de communication selon l'une quelconque des revendications 1 à 10, **caractérisé en ce que** l'amplitude du premier signal correctif ($S_{VVC1}$) est calculée en fonction de la valeur de la puissance du premier signal de référence ($S_R$) reçue à la position géographique déterminée ($POS_1$) et enregistrée dans la mémoire.

12. Dispositif de communication selon l'une quelconque des revendications 1 à 11, **caractérisé en ce que** la position géographique déterminée (POS1) correspond à une direction d'antenne du satellite vis-à-vis d'une orientation de référence, ladite direction étant couplée à une distance moyenne connue du satellite (SAT) pour le calcul d'un gain et d'une phase du signal de référence ($S_R$).

13. Procédé de traitement d'interférences comportant les étapes suivantes :

   ■ Acquisition d'une première position ($POS_1$) à partir d'une interface d'entrée et d'un calculateur (K);
   ■ Génération d'un premier signal utile ($S_1$) à destination d'un premier spot ($C_1$) susceptible de créer des interférences sur un spot voisin ($C_V$), ledit premier signal utile ($S_1$) étant envoyé par un dispositif de communication (1) et transitant par un satellite (SAT) ;
   ■ Génération d'un signal utile voisin (Sv) destiné à être émis dans un spot ($C_V$) voisin du premier spot ($C_1$) et transitant par un satellite (SAT) ;
   ■ Génération d'un premier signal correctif (Svvc1) à partir :

      ○ du premier signal utile (S1) ;
      ○ d'une valeur de phase ($\Phi$1) associée à la première position donnée ;
      ○ d'une valeur de puissance (P1) associée à la première position donnée,

   lesdites valeurs de puissances $P_k$ et de phases $\Phi_k$ étant choisies parmi un ensemble de valeurs de référence (ENSr) prédéfini,
   ■ Génération et émission d'un signal voisin corrigé ($S_{vv}$') à destination du spot voisin ($C_v$) du premier spot (C1) et transitant par un satellite (SAT), ledit signal voisin corrigé ($S_{vv}$') étant obtenu par une combinaison linéaire du signal voisin ($S_{vv}$) et du signal correctif (Svvc1).


**Patentansprüche**

1. Kommunikationsvorrichtung (1), umfassend einen Sender (E1) und dazu bestimmt, eine Vielzahl von Signalen ($S_1$, ..., $S_N$) an einen Satelliten (SAT) ausgehend von dem Sender (E1) auszugeben, wobei der genannte Sender (E1) wenigstens eine Sendeantenne (ANT) und ein Modem (MOD) umfasst, wobei jedes von der Vorrichtung (1) ausgegebene Signal (S1, ... Sn) dazu bestimmt ist, über den Satellit (ST) an einen bestimmten Sendespot (C1, ..., $C_N$) gerichtet zu sein, wobei ein Sendespot (C1, ..., Cn) eine vordefinierte geographische Abdeckung einer Antenne des Satelliten (SAT) aufweist, wobei die genannte Vorrichtung (1) einen Rechner (K) und einen Speicher (M) umfasst, umfassend eine Gruppe von Referenzwerten (ENSr) von Leistungen $P_R(POS_k)$ und Phasen $\theta_R(POS_k)$ wenigstens eines ersten Referenzsignal $S_R$, das an unterschiedlichen Punkten $POS_k$ wenigstens eines Sendespots empfangen ist, wobei ein erstes nützliches Signal ($S_{11}$) in einem ersten Spot ($C_1$) gesendet ist und geeignet ist, ein Interferenzsignal ($S_{1v}$) in einem benachbarten Spot ($C_v$) zu erzeugen, wobei der Sender (E1) geeignet ist, um wenigstens ein benachbartes nützliches Signal ($S_w$) zu erzeugen, das dazu bestimmt ist, in einem benachbarten Spot ($C_v$) des ersten Spots ($C_1$) gesendet zu sein und geeignet ist, durch das Interferenzsignal ($S_{1v}$) gestört zu sein, wobei der Sender (E1) geeignet ist, um ein erstes Korrektursignal ($S_{VVC1}$) ausgehend von dem ersten gesendeten Signal ($S_1$) und wenigstens einen ersten Phasenwert $\theta_R(POS_1)$ und einen ersten Leistungswert $P_R(POS_1)$ der Gruppe von Referenzwerten (ENSr) zu erzeugen, wobei die genannten Phasen- und Leistungswerte in Abhängigkeit von wenigstens einer bestimmten geographischen Position ($POS_1$) in dem benachbarten Spot (Cv) ausgewählt sind, wobei der genannte Sender (E1) geeignet ist, um eine Kombination des ersten Korrektursignals (Svvc1) und des benachbarten nützlichen Signals ($S_{vv}$) zu senden, um ein korrigiertes benachbartes Signal ($S_{vv}$') zu dem Satelliten (SAT) zu erzeugen, wobei das genannte korrigierte benachbarte Signal ($S_{vv}$') dazu bestimmt ist, in dem benachbarten Spot ($C_v$) gesendet zu sein.

2. Kommunikationsvorrichtung gemäß Anspruch 1, **dadurch gekennzeichnet, dass** wenigstens ein Teil des ersten Signals ($S_{11}$) und wenigstens ein Teil des benachbarten Signals ($S_{vv}$) in einem und demselben Frequenzband inbegriffen sind.

3. Kommunikationsvorrichtung (1) gemäß irgendeinem der Ansprüche 1 bis 2, **dadurch gekennzeichnet, dass** die Gruppe von Referenzwerten (ENSr) bei einer Gruppe von bestimmten Positionen $POS_k$, die wenigstens einen benachbarten Spot ($C_v$) eines ersten Spots ($C_1$) abdecken, umfasst:

   ▪ einen von einem ersten Referenzsignal ($S_R$) für jede der bestimmten Positionen $POS_k$ empfangenen Leistungswert $P_R(POS_k)$,
   ▪ einen Phasenwert $\theta_R(POS_k)$ des ersten, für jede der bestimmten Positionen $POS_k$ empfangenen Referenzsignals ($S_R$);
   ▪ ein Referenzverhältnis zwischen einer Leistung eines in dem benachbarten Spot ($C_v$) gesendeten Referenzsignals ($S_{vvR}$) und einer Leistung eines zweiten, in dem ersten Spot ($C_1$) gesendeten Referenzsignals ($S_{1VR}$), wobei das genannte Verhältnis für die Gruppe der bestimmten Positionen $POS_k$ berechnet ist.

4. Kommunikationsvorrichtung (1) gemäß Anspruch 3, **dadurch gekennzeichnet, dass** das erste Korrektursignal (Svvc1) in Abhängigkeit von den Referenzwerten $P_R(POS_k)$, $\theta_R(POS_k)$ der bestimmten geographischen Position ($POS_1$) und einer Vielzahl von zusätzlichen Positionen $POS_k$ in dem benachbarten Spot ($C_v$) bestimmt ist.

5. Kommunikationsvorrichtung gemäß irgendeinem der Ansprüche 1 bis 4, **dadurch gekennzeichnet, dass** die Werte des Referenzverhältnisses unterhalb wenigstens eines Grenzwertes für eine Gruppe von bestimmten Positionen eines und desselben geographischen Sektors wenigstens einen kritischen Bereich eines Spots definieren.

6. Kommunikationsvorrichtung gemäß Anspruch 5, **dadurch gekennzeichnet, dass** der Rechner (K) geeignet ist, um automatisch einen Erzeugungs-Sollwert eines ersten Korrektursignals ($Svvc_1$) zu bestimmen, wenn die bestimmte geographische Position $POS_k$ in einem kritischen Bereich ist oder wenn der Wert des Referenzverhältnisses an der bestimmten geographischen Position niedriger ist als ein Grenzwert.

7. Kommunikationsvorrichtung gemäß Anspruch 6, **dadurch gekennzeichnet, dass** darüber hinaus der Rechner (K) geeignet ist, um das Erzeugen des Sollwertes eines ersten Korrektursignals ($Svvc_1$) auf den Wert eines Kriteriums zu bedingen, das in Abhängigkeit von den Leistungs- und/oder Phasenwerten des in dem benachbarten Spot (Cv) gesendeten nützlichen Signals ($S_{1v}$) und des in dem ersten Spot (C1) von dem Sender E1 gesendeten nützlichen Signal ($S_{11}$) zu berechnen.

8. Kommunikationsvorrichtung gemäß Anspruch 7, **dadurch gekennzeichnet, dass** der Rechner (K) geeignet ist, um die Leistungs- und/oder Phasenwerte des in dem benachbarten Spot (Cv) gesendeten nützlichen Signals (Svv) und des in dem ersten Spot (C1) von dem Sender E1 gesendeten nützlichen Signals ($S_{11}$) in Abhängigkeit von der Nähe der bestimmten geographischen Position zu den Positionen $POS_k$ zu bestimmen, bei denen das Referenzverhältnis einen Grenzwert unterschreitet.

9. Kommunikationsvorrichtung gemäß irgendeinem der Ansprüche 1 bis 8, **dadurch gekennzeichnet, dass** der Rechner (K) geeignet ist, um beim Empfang einer Information, die das Vorhandensein eines Terminals ($T_1$) in der Nähe einer bestimmten geographischen Position ($POS_1$) anzeigt, ein Korrektursignal ($Svvc_1$) zu erzeugen.

10. Kommunikationsvorrichtung gemäß irgendeinem der Ansprüche 1 bis 9, **dadurch gekennzeichnet, dass** die Phase des ersten Korrektursignals ($Svvc_1$) deutlich der entgegengesetzten Phase der Phase eines Referenzsignals ($S1_{VR}$) entspricht, das in der bestimmten geographischen Position (POS1) oder deutlich nahe empfangen und im Speicher abgespeichert ist.

11. Kommunikationsvorrichtung gemäß irgendeinem der Ansprüche 1 bis 10, **dadurch gekennzeichnet, dass** die Amplitude des ersten Korrektursignals ($Svvc_1$) in Abhängigkeit von dem Wert der Leistung des ersten Referenzsignals ($S_R$) berechnet ist, das in der bestimmten geographischen Position ($POS_1$) empfangen und im Speicher abgespeichert ist.

12. Kommunikationsvorrichtung gemäß irgendeinem der Ansprüche 1 bis 11, **dadurch gekennzeichnet, dass** die bestimmte geographische Position (POS1) einer Antennenrichtung des Satelliten gegenüber einer Referenzausrichtung entspricht, wobei die genannte Richtung mit einer bekannten mittleren Entfernung des Satelliten (SAT1) für die Berechnung eines Zuwachses und einer Phase des Referenzsignals ($S_R$) gekoppelt ist.

13. Interferenzen-Verarbeitungsverfahren, umfassend die folgenden Schritte:

- Erwerb einer ersten Position ($POS_1$) ausgehend von einer Eingangs-Schnittstelle und einem Rechner (K);
- Erzeugung eines ersten nützlichen Signals ($S_1$) zu einem ersten Spot ($C_1$), der geeignet ist, Schnittstellen auf einem benachbarten Spot (Cv) herzustellen, wobei das genannte erste nützliche Signal ($S_1$) von einer Kommunikationsvorrichtung (1) versandt wird und durch einen Satelliten (SAT) hindurchtritt;
- Erzeugung eines benachbarten nützlichen Signals (Sv), das dazu bestimmt ist, in einem benachbarten Spot (Cv) des ersten Spots ($C_1$) gesendet zu werden und durch einen Satelliten (SAT) hindurchzutreten;
- Erzeugung eines ersten Korrektursignals (Svvc1) ausgehend von:

  ○ dem ersten nützlichen Signal (S1);
  ○ einem Phasenwert (θ1), der der ersten bestimmten Position zugeordnet ist;
  ○ einem Leistungswert (P1), der der ersten bestimmten Position zugeordnet ist,

  wobei die genannten Leistungs- $P_k$ und Phasenwerte $\theta_k$ aus einer vorbestimmten Gruppe von Referenzwerten (ENSr) ausgewählt sind,
- Erzeugung und Senden eines korrigierten benachbarten Signals ($S_{vv}$') an den benachbarten Spot ($C_v$) des ersten Spots (C1) und Hindurchtreten durch einen Satelliten (SAT), wobei das genannte korrigierte benachbarte Signal (Svv') durch eine lineare Kombination des benachbarten Signals (Svv) und des Korrektursignals (Svvc1) erhalten wird.

## Claims

1. A communication device (1) comprising a transmitter (E1) and being for transmitting a plurality of signals ($S_1$, ..., $S_N$) to a satellite (SAT) from the transmitter (E1), said transmitter (E1) including at least one transmitting antenna (ANT) and a modem (MOD), each of the signals ($S_1$, ..., Sn) transmitted by the device (1) being for being addressed to a given transmitting spot ($C_1$, ..., $C_N$) via the satellite (SAT), a transmitting spot ($C_1$, ..., Cn) having a predefined geographical coverage of an antenna of the satellite (SAT), said device (1) including a calculator (K) and a memory (M) including a set of reference values (ENSr) of powers $P_R(POS_k)$ and phases $\Phi_R(POS_k)$ of at least a first reference signal $S_R$ received at different points $POS_k$ of at least one transmitting spot, a first wanted signal ($S_{11}$) being transmitted in a first spot ($C_1$) and being likely to generate an interfering signal ($S_{1v}$) in a neighbouring spot ($C_v$), the transmitter (E1) being adapted for generating at least one wanted neighbouring signal ($S_{vv}$) for being transmitted in a neighbouring spot ($C_v$) of the first spot ($C_1$) and being likely to be disturbed by the interfering signal ($S_{1v}$), the transmitter (E1) being adapted for generating a first correcting signal ($S_{vvc1}$) from the first transmitted signal ($S_1$) and at least a first phase value $\Phi_R(POS_1)$ and a first power value $P_R(POS_1)$ of the set of reference values (ENSr), said phase and power values being chosen depending on at least one determined geographical position ($POS_1$) in the neighbouring spot (Cv), said transmitter (E1) being adapted for transmitting a combination of the first correcting signal ($S_{vvc1}$) and the wanted neighbouring signal ($S_{vv}$) in order to generate a corrected neighbouring signal ($S_{vv}$') to the satellite (SAT), said corrected neighbouring signal ($S_{vv}$') being for being transmitted in the neighbouring spot

($C_v$).

**2.** The communication device according to claim 1, **characterised in that** at least one part of the first signal ($S_{11}$) and at least one part of the neighbouring signal ($S_{vv}$) are included in a same frequency band.

**3.** The communication device (1) according to any of claims 1 and 2, **characterised in that** the set of reference values ($ENSr$) includes, for a set of given positions $POS_k$ covering at least one neighbouring spot ($C_v$) of a first spot ($C_1$):

- a received power value $P_R(POS_k)$ of a first reference signal ($S_R$) for each of the given positions $POS_k$,
- a phase value $\Phi_R(POS_k)$ of the first reference signal ($S_R$) received for each of the given positions $POS_k$;
- a reference ratio between a power of a reference signal ($S_{vvR}$) transmitted in the neighbouring spot ($C_v$) and a power of a second reference signal ($S_{1vR}$) transmitted in the first spot ($C_1$), said ratio being calculated for the set of the given positions $POS_k$.

**4.** The communication device (1) according to claim 3, **characterised in that** the first correcting signal ($S_{vvc1}$) is determined depending on the reference values $P_R(POS_k)$, $\Phi_R(POS_k)$ of the determined geographical position ($POS_1$) and of a plurality of further positions ($POS_k$) in the neighbouring spot ($C_v$).

**5.** The communication device according to any of claims 1 to 4, **characterised in that** the values of the reference ratio lower than at least one threshold for a set of given positions of a same geographical region define at least one critical zone of a spot.

**6.** The communication device according to claim 5, **characterised in that** the calculator (K) is adapted for automatically determining a command to generate a first correcting signal ($S_{vvc1}$) when the determined geographical position $POS_k$ is in a critical zone or when the value of the reference ratio is lower than a threshold at the determined geographical position POSv.

**7.** The communication device according to claim 6, **characterised in that** the calculator (K) is further adapted for conditionning the generation of the command of a first correcting signal ($S_{vvc1}$) to the value of a criterion calculated depending on the power and/or phase values of the wanted signal ($S_{1v}$) transmitted in the neighbouring spot (Cv) and of the wanted signal ($S_{11}$) transmitted in the first spot ($C_1$) by the transmitter E1.

**8.** The communication device according to claim 7, **characterised in that** the calculator (K) is adapted for automatically determining the power and/or phase values of the wanted signal ($S_{vv}$) transmitted in the neighbouring spot ($C_v$) and of the wanted signal ($S_{11}$) transmitted in the first spot (C1) by the transmitter E1 depending on the proximity of the determined geographical position with positions $POS_k$ at which the reference ratio is lower than a threshold .

**9.** The communication device according to any of claims 1 to 8, **characterised in that** the calculator (K) is adapted for generating a correcting signal ($S_{vvc1}$) upon receiving information indicating the presence of a terminal ($T_1$) in the proximity of a determined geographical position ($POS_1$).

**10.** The communication device according to any of claims 1 to 9, **characterised in that** the phase of the first correcting signal ($S_{vvc1}$) substantially corresponds to the opposite phase of the phase of a reference signal ($S_{1VR}$) received at or substantially close to the given geographical position ($POS_1$) and recorded in the memory.

**11.** The communication device according to any of claims 1 to 10, **characterised in that** the amplitude of the first correcting signal ($S_{vvc1}$) is calculated depending on the power value of the first reference signal ($S_R$) received at the determined geographical position ($POS_1$) and recorded in the memory.

**12.** The communication device according to any of claims 1 to 11, **characterised in that** the determined geographical position ($POS_1$) corresponds to an antenna direction of the satellite relative to a reference orientation, said direction being coupled with a known mean distance of the satellite (SAT) for calculating a gain and a phase of the reference signal ($S_R$).

**13.** A method for processing interference including the following steps of:

- acquiring a first position ($POS_1$) from an input interface and a calculator (K);
- generating a first wanted signal ($S_1$) to a first spot ($C_1$) likely to create interference on a neighbouring spot

($C_V$), said first wanted signal ($S_1$) being sent by a communication device (1) and passing through a satellite (SAT);
- generating a neighbouring wanted signal (Sv) for being transmitted in a neighbouring spot ($C_V$) of the first spot ($C_1$) and passing through a satellite (SAT);
- generating a first correcting signal ($S_{vvc1}$) from:

    ◦ the first wanted signal ($S_1$);
    ◦ a phase value ($\Phi1$) associated with the first given position;
    ◦ a power value (P1) associated with the first given position,

said power $P_k$ and phase $\Phi_k$ values being chosen from a predefined set of reference values (ENSr),
- generating and transmitting a corrected neighbouring signal ($S_{vv}$') to the neighbouring spot ($C_V$) of the first spot (C1) and passing through a satellite (SAT), said corrected neighbouring signal ($S_{vv}$') being obtained by a linear combination of the neighbouring signal ($S_{vv}$) and of the correcting signal ($S_{vvc1}$).

EP 3 422 599 B1

SAT

S1, ..., Sn

E1

ANT

MOD

K    M

DATA

**FIG.1**

1

S2

S6

S1

C1   C2   C3   C4   C5   C6

**FIG.2**

DETECT POS1

EXPL (ENSr)          DETECT SPOT INT

$P_{1R}$
$\Phi_{1R}$
$C_v$                    $S_{11}(C1) = S_{1v}(Cv)$

GEN $S_{vvc1}(Cv)$

$S_{vv}(Cv)$ ⟶ GEN $S_{vv}'(Cv)$

**FIG.7**

C1   C2   C3   C4   C5   C6   C7   C8   C9   C10

FIG.3B

FIG.3A

FIG.4A

FIG.4B

FIG.5A

FIG.5B

FIG.6A

FIG.6B

**RÉFÉRENCES CITÉES DANS LA DESCRIPTION**

**Documents brevets cités dans la description**

- US 6157811 A